# EUROPEAN PATENT SPECIFICATION

(11) **EP 2 180 312 B1**
(45) Date of publication and mention of the grant of the patent: **30.07.2014**
(21) Application number: 09252229.1
(22) Date of filing: 18.09.2009
(51) Int. Cl.: G01N 21/73

(54) **Method and system for monitoring silane deposition**
Verfahren und System zur Überwachung von Silanabscheidung
Procédé et système de contrôle de dépôt de silane

(30) Priority: 21.10.2008 US 255177
(43) Date of publication of application: 28.04.2010
(73) Proprietor: United Technologies Corporation, Hartford, CT 06101 (US)
(72) Inventor: Vontell, John H., Manchester CT 06040 (US)
(74) Representative: Leckey, David Herbert

(56) References cited:
- US-A- 6 045 877
- US-A1- 2003 183 245

## Description

### BACKGROUND

The present invention relates to a method and device for monitoring silane deposition. More particularly, the present invention relates to a method and device for determining whether a component in a plasma processing apparatus has been silanized.

Silanes are a class of chemical compounds containing silicon and hydrogen. Silane has the generic chemical formula of SiH₄ and is the silicon analog of methane. A silane is often applied to bonding surfaces of aircraft components, such as fan inlet shroud fairings, prior to bonding the component to a frame or other component. Different types of silanes are used to improve the bonding properties of components, whether they are for aircraft or other commercial uses. Silanes generally improve the strength and integrity of the bond between components.

### SUMMARY

One embodiment of the present invention relates to a method of monitoring silane deposition in a plasma processing apparatus. The method includes placing a silane deposition sensor within a processing vessel in proximity with a plasma field receptor. The method further includes introducing a silane into the processing vessel, applying electromagnetic radiation within the processing vessel, and optically assessing the silane deposition sensor for silane.

Additional embodiments of the present invention relate to a silane deposition monitoring system. In one embodiment, the system includes a processing vessel having an inlet for introducing silane and a power unit for applying electromagnetic radiation, a silane deposition sensor and a plasma field receptor located in proximity with the silane deposition sensor. An additional embodiment of the system includes a silane deposition housing, a plasma field receptor, a light source and a photosensor. The silane deposition housing includes an interior region, a window and an outer surface. The window allows passage of light from the light source located within the interior region. The photosensor senses light transmitted through the window and transmits a signal.

### BRIEF DESCRIPTION OF THE DRAWINGS

FIG. 1 is a view showing the arrangement of a plasma processing apparatus.
FIG. 2 is a side view of a silane deposition monitoring system.
FIG. 3 is a side view of a silane deposition monitoring system having a silane deposition band.
FIG. 4 is a side view of an alternate embodiment of a silane deposition monitoring system having a silane deposition band.
FIG. 5 is a flow diagram showing one embodiment of a method for monitoring silane deposition.
FIG. 6 is a side view of a silane deposition monitoring system with a photosensor.

### DETAILED DESCRIPTION

Recent advances in plasma technology have allowed engineers to apply a thin layer of silane to components using plasmas. Until now, silane layers were typically brushed onto components prior to bonding. Plasma silanization of a component is performed inside a plasma processing apparatus upon introduction of a silane into a processing vessel of the plasma processing apparatus and the application of electromagnetic radiation. The thin layer of silane offers the same functionality as the brushed on silane while providing additional advantages during application.

One limitation of plasma silanization is that because only a thin layer of silane is applied to a component, a silanized component is visually indistinguishable from a non-silanized one. Expensive chromatographic or spectrophotometric techniques are required to verify whether a component contains a silane layer. At times, plasma processing operators may forget or not know whether a component within the processing vessel has been silanized or not. Thus, a way to determine whether silanization has taken place without using expensive techniques is desired.

A thin layer of silane can be applied to a component using plasma technology. One method of applying a thin layer of silane to a component includes a multi-step process using plasmas. First, the component is placed in a plasma processing apparatus. Second, the component is "cleaned" with a plasma inside the apparatus. "Cleaning" refers to removing contaminants and weak boundary layers from the surface of the component. Suitable gases for cleaning include argon, oxygen, tetrafluoromethane, hydrogen and combinations thereof. Third, the component surfaces are "hydroxylated" with a plasma. "Hydroxylation" refers to the addition of hydroxyl (-OH) groups onto the surface of the component. Suitable hydroxylating agents include argon, water vapor, hydrogen peroxide, methanol and combinations thereof. Lastly, the component surfaces are "silanized" with a plasma. "Silanization" refers to the addition of a silane layer through self-assembly to the surface of the component. The type of silane chosen for bonding preparation depends on the adhesive used for bonding. Suitable vinyl silanes include vinyltrimethylsilane, vinyltrimethylethoxysilane, vinyldimethylethoxysilane, vinyltrimethoxypropylsilane and 3-aminopropylethoxysilane. Because the layer of silane applied to a component is thin (on the order of about 100 nm) it is difficult to determine whether a component has been silanized or not.

The present invention was developed while observing silane deposition behavior using plasma. Silane deposition using plasma is carried out in a processing vessel. Typically, processing vessels contain one or more metal shelves. Components that are treated within the processing vessel are generally placed on a metal shelf during operation. Applicants observed that when a component was located on one of the metal shelves within the processing vessel, excess silane was deposited on the component in the vicinity of the metal shelf. The excess silane was evidenced by a white, opaque band.

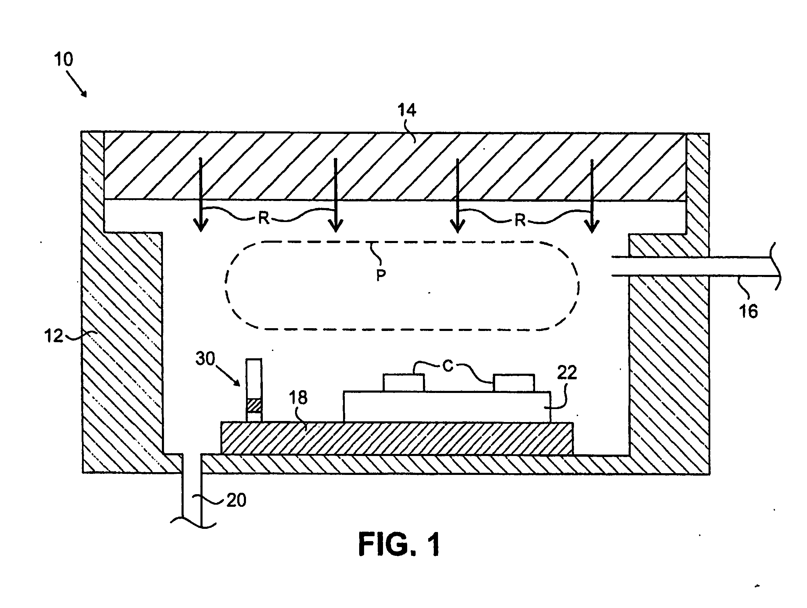

FIG. 1 illustrates one embodiment of plasma processing apparatus 10 capable of depositing a silane onto a component. Plasma processing apparatus 10 includes processing vessel 12, power unit 14, inlet 16, metal shelf 18, exhaust line 20, component support 22 and silane deposition monitoring system 30. Processing vessel 12 accommodates a component (target object) C, such as a fan inlet shroud fairing, and processes the component C with a plasma. Power unit 14 supplies electromagnetic radiation R into processing vessel 12 and generates plasma P in processing vessel 12 by the application of electromagnetic radiation R. Inlet 16 allows gases and silanes to enter processing vessel 12. Exhaust line 20 allows for vacuum evacuation of processing vessel 12. Metal shelf 18 and component support 22 support component C.

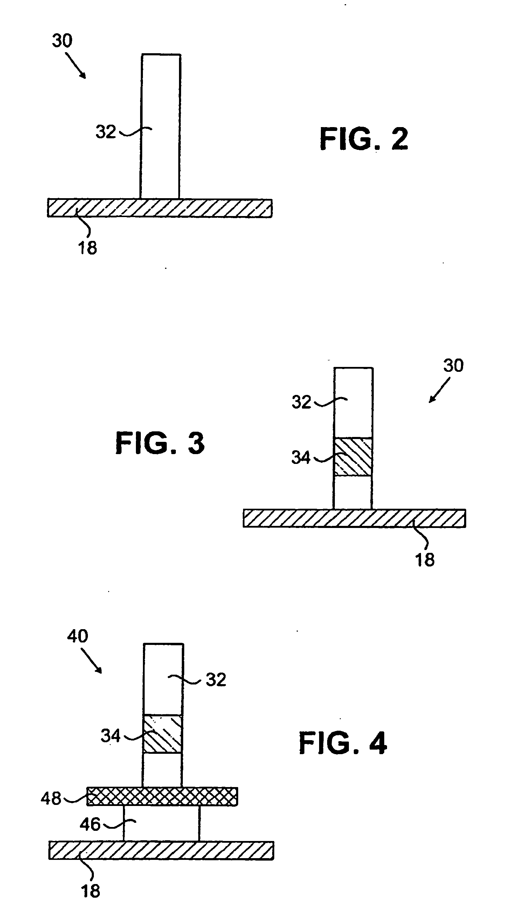

FIG. 2 illustrates one embodiment of a silane deposition monitoring system 30. Silane deposition monitoring system 30 includes silane deposition sensor 32 and metal shelf 18. Silane deposition monitoring system 30 is located within processing vessel 12 in which plasma silanization occurs. Silane deposition sensor 32 is constructed of a non-metallic material. Suitable materials for silane deposition sensor 32 include fiberglass, polymers, and composite materials. For example, in an exemplary embodiment, silane deposition sensor 32 is a fiberglass polymer matrix composite. In exemplary embodiments, silane deposition sensor 32 is of a color other than white. Exemplary colors include black, gray, brown, red, blue, green, and combinations of the above and other colors that offer suitable contrast to white. Metal shelf 18 is typically stainless steel, but other metals that provide support and act as plasma field receptors as described below are also suitable.

In one embodiment, silane deposition sensor 32 is merely placed on metal shelf 18. In alternate embodiments, silane deposition sensor 32 is fastened or attached to metal shelf 18. Screws or clamps and other fastening or attachment means are suitable for fastening or attaching silane deposition sensor 32 to metal shelf 18. Metal shelf 18 acts as a plasma field receptor, as discussed below.

Components C to be silanized are placed in processing vessel 12. Plasma silanization occurs inside processing vessel 12. One or more silanes, such as those described above, are introduced into processing vessel 12 by inlet 16. Once introduction of silane has commenced, a predetermined amount of electromagnetic radiation R is applied inside processing vessel 12. The combination of the silane and electromagnetic radiation R results in a silane plasma P and silane is deposited on components C placed within processing vessel 12. Silane is also deposited on silane deposition sensor 32 during plasma silanization.

Due to the proximity between silane deposition sensor 32 and metal shelf 18, an increased level of silanization occurs on silane deposition sensor 32. Metal shelf 18 acts as a plasma field receptor and increases the rate of silane deposition on silane deposition sensor 32. The presence of a plasma field receptor in proximity to silane deposition sensor 32 affects the electromagnetic field in the area of silane deposition sensor 32 and causes increased chemical reactions between a silane and silane deposition sensor 32. The increased chemical reactions result in an increased rate of silane deposition during plasma silanization.

FIG. 3 illustrates the silane deposition monitoring system 30 of FIG. 2 after plasma silanization has taken place. Silane deposition band 34 is present on silane deposition sensor 32 following plasma silanization. Silane deposition band 34 indicates an excess of silane. The presence of a plasma field receptor (metal shelf 18) in proximity to silane deposition sensor 32 causes an increase in the rate of silane deposition. A thicker layer of silane is deposited on silane deposition sensor 32 in the area of silane deposition band 34: This thicker layer of silane is visually perceptible on silane deposition sensor 32 as a white, opaque band. Thus, exemplary embodiments of silane deposition sensor 32 are of a color that offers sufficient contrast from white as described above.

A plasma processing operator can determine if the plasma silanization step has been performed for a component or set of components by inspecting silane deposition sensor 32. The presence of a white, opaque band on silane deposition sensor 32 confirms that plasma silanization has taken place within the processing vessel 12. An absence of a white, opaque band on silane deposition sensor 32 tells the operator that plasma silanization has yet to take place. Following plasma silanization, areas of silane deposition sensor 32 that do not display a white, opaque band of silane contain only a thin layer of silane. This thin layer of silane is the same as what is desired for preparing a component for bonding.

In some instances, once plasma silanization is complete and verified by the operator, silane deposition sensor 32 is removed from silane deposition monitoring system 30 and placed along with the silanized component(s) C to verify that silanization has been performed farther downstream in the manufacturing or bonding process. In other instances, silane deposition sensor 32 remains with silane deposition monitoring system 30 or is discarded.

In an exemplary embodiment of silane deposition monitoring system 30, silane deposition sensor 32 is reusable. After the plasma silanization is complete and silanization is verified, silane deposition sensor 32 is prepared for reuse. Silane deposition band 34 is removed from silane deposition sensor 32. Suitable methods of silane deposition band 34 removal include wiping silane deposition sensor 32 with a cloth, rinsing silane deposition sensor 32 with a solvent capable of dissolving silane, or a combination of the two. In an exemplary embodiment of silane deposition monitoring system 30 where silane deposition sensor 32 is reused, silane deposition sensor 32 has a smooth surface. A smooth surface ensures that silane deposition band 34 can be removed from silane deposition sensor 32. If the surface of silane deposition sensor 32 is rough or pitted, the deposited silane may be difficult to remove and silane deposition sensor 32 may retain some or all of the white, opaque band after wiping or rinsing with solvent. Alternative embodiments of silane deposition monitoring system 30 include a disposable silane deposition sensor 32, which is discarded after use.

FIG. 4 illustrates one embodiment of silane deposition monitoring system 40. Silane deposition monitoring system 40 includes silane deposition sensor 32, metal shelf 18, plasma field isolator 46 and plasma field receptor 48. The composition of silane deposition sensor 32 is the same as described above. Plasma field isolator 46 is located between silane deposition sensor 32 and metal shelf 18. Plasma field isolator 46 is a non-metal material and spaces silane deposition sensor 32 from metal shelf 18. In an exemplary embodiment plasma field isolator 46 is polyethylene. Plasma field isolator 46 prevents metal shelf 18 from acting as a plasma field receptor to silane deposition sensor 32 as described above.

Plasma field receptor 48 is typically a metal object. Plasma field receptor 48 is typically stainless steel, but other metals that act as plasma field receptors are also suitable. In one embodiment, plasma field receptor 48 is a stainless steel washer. Plasma field receptor 48 increases the rate of silane deposition on silane deposition sensor 32. The presence of a plasma field receptor in proximity to silane deposition sensor 32 affects the electromagnetic filed in the area of silane deposition sensor 32 and causes increased chemical reactions between silanes and silane deposition sensor 32. The increased chemical reactions result in an increased rate of silane deposition during plasma silanization. FIG. 4 illustrates silane deposition monitoring system 40 following plasma silanization. Silane deposition band 34 is present on silane deposition sensor 32.

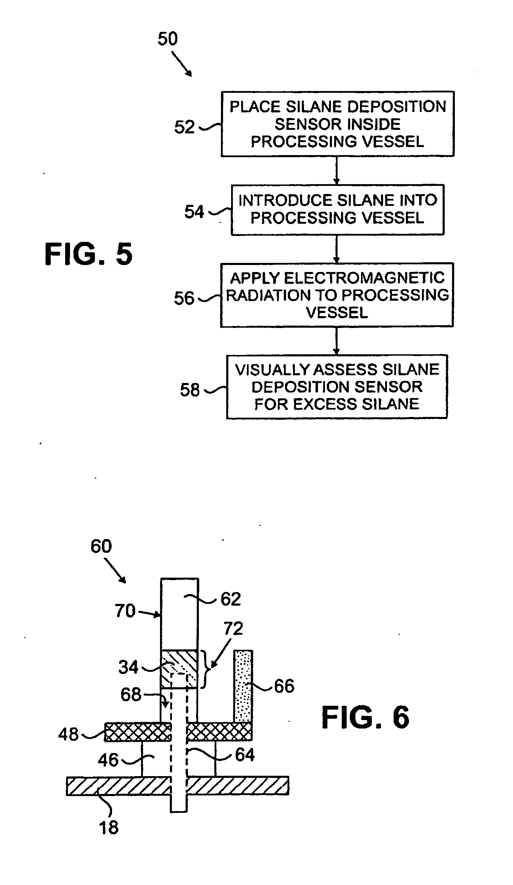

Silane deposition monitoring systems 30, 40 provide for a method of monitoring silane deposition in processing vessel 12. FIG. 5 illustrates a flow diagram showing the steps involved in one embodiment of a method of monitoring silane deposition 50. The method allows a determination of whether plasma silanization has taken place. In step 52 a silane deposition sensor 32 is placed within processing vessel 12. Silane deposition sensor 32 is arranged within processing vessel 12 to be located in proximity with a plasma field receptor. In silane deposition monitoring system 30, silane deposition sensor 32 is in proximity to metal shelf 18. In another embodiment, silane deposition monitoring system 40 shows silane deposition sensor 32 is in proximity to plasma field receptor 48. In step 54 a silane or mixture of silanes is introduced into processing vessel 12. In step 56 electromagnetic radiation is applied within processing vessel 12 to initiate plasma silanization. Additional silane may be introduced into processing vessel 12 during step 56. In some embodiments, step 56 occurs following introduction of oxygen, argon or a mixture of oxygen and argon and application of electromagnetic radiation. Steps 54 and 56 are typically performed for a predetermined length of time depending on the silane and the amount of electromagnetic radiation applied. In step 58 a plasma processing operator visually inspects silane deposition sensor 32 to assess whether plasma silanization has taken place. The presence of silane deposition band 34 on silane deposition sensor 32 confirms that plasma silanization has occurred. The absence of silane deposition band 34 on silane deposition sensor 32 indicates that plasma silanization has not yet been performed.

While silane deposition may be qualitatively monitored by a plasma processing operator visually, silane deposition may also be quantitatively monitored by using a light source and a photosensor. FIG. 6 illustrates one embodiment of silane deposition monitoring system 60. Silane deposition monitoring system 60 includes silane deposition housing 62, metal shelf 18, plasma field isolator 46, plasma field receptor 48, light source 64 and photosensor 66. The composition and function of metal shelf 18, plasma field isolator 46, and plasma field receptor 48 are the same as described above.

Silane deposition housing 62 includes interior region 68, outer surface 70 and window 72. Interior region 68 allows for the placement of light source 64 within silane deposition housing 62. Outer surface 70 functions similarly to silane deposition sensor 32. During plasma silanization, excess silane is deposited on outer surface 70 due to the proximity of plasma field receptor 48. Window 72 is generally positioned on silane deposition housing 62 in a location where silane deposition band 34 is deposited during plasma silanization. Window 72 is transparent.

In one embodiment, silane deposition housing 62 is an optically clear plastic, such as polycarbonate, allyl diglycol carbonate, polymethyl methacrylate, and styrene copolymers. Areas of outer surface 70 of silane deposition housing 62 that do not receive excess deposition of silane during plasma silanization are covered. Suitable materials for covering outer surface 70 include paint, other opaque coatings or opaque fabrics or adhesive materials. Window 72 is formed in an area in which outer surface 70 is not covered. In other embodiments, silane deposition housing 62 is formed from glass, such as soda-lime, borosilicate or quartz, or ceramics, such as mica or aluminum oxynitride. The area of silane deposition housing 62 where excess silane is deposited during plasma silanization contains a transparent material, such as an optically clear plastic, to form window 72.

Light source 64 is positioned in interior region 68 of silane deposition housing 62. In one embodiment, light source 64 is an electric bulb. In another embodiment, light source 64 is a light emitting diode. In yet another embodiment, light source 64 is an optical fiber. Light source 64 is positioned and configured to emit light through window 72 of silane deposition housing 62.

Photosensor 66 is generally located near outer surface 70 of silane deposition housing 62. Photosensor 66 is configured to sense light emitted through window 72 by light source 64. Photosensor 66 is also configured to transmit a signal based on the amount of light sensed. Suitable types of photosensors 66 include photoresistors, photovoltaic cells and photomultipliers. In the embodiment illustrated in FIG. 6, photosensor 66 is shown connected to plasma field receptor 48 and located near window 72. In other embodiments, photosensor 66 is not connected to plasma field receptor 48, but a generally uninterrupted path between window 72 and photosensor 66 exists. In one embodiment, silane deposition monitoring system 60 includes a cover (not shown) to prevent ambient light within plasma processing apparatus 10 from being sensed by photosensor 66. When present, the cover prevents ambient light from entering silane deposition monitoring system 60, but allows chamber gases and plasmas to enter silane deposition monitoring system 60.

Silane deposition monitoring system 60 provides for a quantitative method of monitoring silane deposition. Steps 52, 54 and 56 of method of monitoring silane deposition 50 (FIG. 5) are followed to initiate plasma silanization. Light source 64 is activated so that it emits light prior to or at the beginning of step 56. Prior to plasma silanization, window 72 is transparent. Light from light source 64 travels through window 72 and is sensed by photosensor 66. Photosensor 66 transmits a baseline sense signal indicating that it senses a baseline amount of light. As plasma silanization proceeds, silane is deposited on outer surface 70 of silane deposition housing 62. As silane is deposited, window 72 becomes increasingly obscured by silane deposition. The opacity of window 72 increases as plasma silanization continues. Throughout plasma silanization, photosensor 66 transmits a sense signal indicating the amount of light sensed. As the opacity of window 72 increases, light scatters and photosensor 66 senses less light from light source 64. The sense signal transmitted by photosensor 66 then changes from the baseline signal. The change in signal can be used to quantitatively determine an endpoint for plasma silanization. Once a predetermined signal threshold is reached, plasma silanization can be discontinued. Depending on the desired amount of silanization, plasma silanization can be discontinued once window 72 has a desired level of opacity.

Silane deposition monitoring system 60 allows for real-time monitoring of plasma silanization. In one embodiment, plasma silanization is automated based on the signals transmitted by photosensor 66. Silane deposition monitoring system 60 generates an electronic record to document that plasma silanization has been performed and to what degree. In another embodiment, a plasma processing operator determines an endpoint for plasma silanization based upon the signals transmitted by photosensor 66.

In summary, the present invention relates to a method of monitoring silane deposition and a monitoring system. The method and system allow a plasma processing operator to assess whether components have been silanized. The assessment is made visually by an operator or is automated using a photosensor. Such a method and system allow an operator to verify silanization without the need for expensive chromatographic or spectrophotometric equipment. The present invention allows operators to know the condition of components after shift changes and provides an electronic record of silanization or a visual reminder to operators that have stepped away from plasma processing apparatus 10 to perform other tasks.

Although the present invention has been described with reference to exemplary embodiments, workers skilled in the art will recognize that changes may be made in form and detail without departing from the scope of the invention, which is defined by the appended claims.

## Claims

1. A method of monitoring silane deposition in a plasma processing apparatus (10), the method being **characterized by**:
placing a silane deposition sensor (32;70) within a processing vessel (12), wherein the silane deposition sensor (32;70) is configured to receive silane upon introduction of silane into the processing vessel (12) and application of electromagnetic radiation and is located in proximity with a plasma field receptor (18;48) so as to increase silane deposition on said sensor (32;70) during the application of said electromagnetic radiation;
introducing a silane into the processing vessel (12);
applying electromagnetic radiation inside the processing vessel (12); and
optically assessing the silane deposition sensor (32;70) for silane.

2. The method of claim 1, wherein optically assessing the silane deposition sensor (32) comprises visually assessing the silane deposition sensor for an excess of silane.

3. The method of claim 1, wherein the silane deposition sensor comprises a light source (64) and a photosensor (66), and wherein optically assessing the silane deposition sensor (70) comprises sensing light emitted from the light source (64) with the photosensor (66).

4. A silane deposition monitoring system (30,40) comprising:
a processing vessel (12) comprising:
an inlet (16) for introducing a silane into the processing vessel (12); and
a power unit (14) for applying electromagnetic radiation inside the processing vessel (12);
and **characterized by**
a silane deposition sensor (32;70) located within the processing vessel (12) and configured to receive silane upon introduction of silane into the processing vessel and application of electromagnetic radiation; and
a plasma field receptor (18;48), wherein the plasma field receptor (18;48) is located in proximity with the silane deposition sensor (32;70) so as to increase silane deposition on said sensor (32;70) during the application of said electromagnetic radiation.

5. The method or system of any preceding claim, wherein the silane deposition sensor (32) is a fiberglass polymer matrix composite.

6. The method or system of any preceding claim, wherein the silane deposition sensor (32) is disposable.

7. The method or system of any preceding claim, wherein the silane deposition sensor (32) has a smooth surface.

8. The method or system of any preceding claim, wherein the silane deposition sensor (32) is a color selected from the group consisting of red, blue, green and combinations thereof.

9. The method or system of any preceding claim, wherein the processing vessel (12) further comprises a metal shelf (18) and the plasma field receptor is the metal shelf (18).

10. The method or system of claim 9, wherein the silane deposition sensor (32) is fastened to the metal shelf (18).

11. The method or system of any of claims I to 8, wherein the processing vessel (12) further comprises a metal shelf (18) and a plasma field isolator (46) is located between the silane deposition sensor (32) and a metal shelf (18) of the processing vessel (12).

12. A silane deposition monitoring system (60) **characterized by** a silane deposition housing (62) comprising:
an interior region (68);
a window (72) configured to allow passage of light from the interior region (68); and
an outer surface (70) configured to receive silane upon introduction of silane and application of electromagnetic radiation;
a plasma field receptor (18;48), wherein the plasma field receptor (18;48) is located in proximity with the silane deposition housing (62) so as to increase silane deposition on said sensor (32;70) during the application of said electromagnetic radiation;
a light source (64) positioned in the interior region (68) of the silane deposition housing (62) and configured to emit light through the window (72) of the silane deposition housing; and
a photosensor (66) configured to sense light emitted from the window of the silane deposition housing (62) and configured to transmit a sense signal.

13. The silane deposition monitoring system of claim 12, wherein the light source (64) is selected from the group consisting of an electric light bulb, a light emitting diode, or an optical fiber.

14. The silane deposition monitoring system of claim 12 or 13, wherein the silane deposition housing (62) is an optically clear plastic.

15. The silane deposition monitoring system of claim 14, wherein the silane deposition housing (62) is a polycarbonate.

## Patentansprüche

1. Verfahren zur Überwachung einer Silanabscheidung in einer Plasmabehandlungsvorrichtung (10), wobei das Verfahren **gekennzeichnet ist durch**
Anbringen eines Silanabscheidungssensors (32; 70) in einem Behandlungsgefäß (12), wobei der Silanabscheidungssensor (32; 70) dazu ausgelegt ist, bei Einbringung von Silan in das Behandlungsgefäß (12) und Anwendung von elektromagnetischer Strahlung Silan anzunehmen, und sich in der Nähe eines Plasmafeldrezeptors (18; 48) befindet, um die Silanabscheidung auf dem Sensor (32; 70) während der Anwendung der elektromagnetischen Strahlung zu steigern;
Einbringen eines Silans in das Behandlungsgefäß (12);
Anwenden von elektromagnetischer Strahlung im Inneren des Behandlungsgefäßes (12); und
optisch Beurteilen des Silanabscheidungssensors (32; 70) hinsichtlich Silan.

2. Verfahren nach Anspruch 1, bei dem das optisch Beurteilen des Silanabscheidungssensors (32) ein visuell Beurteilen des Silanabscheidungssensors hinsichtlich eines Überschusses an Silan aufweist.

3. Verfahren nach Anspruch 1, bei dem der Silanabscheidungssensor eine Lichtquelle (64) und einen Fotosensor (66) aufweist, und bei dem das optisch Beurteilen des Silanabscheidungssensors (70) ein Wahrnehmen von Licht, das von der Lichtquelle (64) emittiert wird, mit dem Fotosensor (66) aufweist.

4. Silanabscheidungs-Überwachungssystem (30, 40) aufweisend:
ein Behandlungsgefäß (12) aufweisend:
einen Einlass (16) zum Einbringen eines Silans in das Behandlungsgefäß (12); und
eine Energiequelle (14) zur Anwendung von elektromagnetischer Strahlung im Inneren des Behandlungsgefäßes (12);
und **gekennzeichnet durch**
einen Silanabscheidungssensor (32; 70), der sich in dem Behandlungsgefäß (12) befindet und dazu ausgelegt ist, bei Einbringung von Silan in das Behandlungsgefäß und Anwendung von elektromagnetischer Strahlung Silan anzunehmen; und
einen Plasmafeldrezeptor (18; 48), wobei sich der Plasmafeldrezeptor (18; 48) in der Nähe des Silanabscheidungssensors (32; 70) befindet, um die Silanabscheidung auf dem Sensor (32; 70) während der Anwendung der elektromagnetischen Strahlung zu steigern.

5. Verfahren oder System nach einem vorangehenden Anspruch, bei dem der Silanabscheidungssensor (32) ein Glasfaser-Polymermatrix-Verbundstoff ist.

6. Verfahren oder System nach einem vorangehenden Anspruch, bei dem der Silanabscheidungssensor (32) zum einmaligen Gebrauch ist.

7. Verfahren oder System nach einem vorangehenden Anspruch, bei dem der Silanabscheidungssensor (32) eine glatte Oberfläche hat.

8. Verfahren oder System nach einem vorangehenden Anspruch, bei dem der Silanabscheidungssensor (32) eine Farbe hat, die ausgewählt wird aus der Gruppe, die aus rot, blau, grün und Kombinationen davon besteht.

9. Verfahren oder System nach einem vorangehenden Anspruch, bei dem das Behandlungsgefäß (12) außerdem einen Metallsockel (18) aufweist, und der Plasmafeldrezeptor der Metallsockel (18) ist.

10. Verfahren oder System nach Anspruch 9, bei dem der Silanabscheidungssensor (32) an dem Metallsockel (18) befestigt ist.

11. Verfahren oder System nach einem der Ansprüche 1 bis 8, bei dem das Behandlungsgefäß (12) außerdem einen Metallsockel (18) aufweist, und sich ein Plasmafeld-Isolator (46) zwischen dem Silanabscheidungssensor (32) und einem Metallsockel (18) des Behandlungsgefäßes (12) befindet.

12. Silanabscheidungs-Überwachungssystem (60), **gekennzeichnet durch** ein Silanabscheidungsgehäuse (62) aufweisend:
einen Innenbereich (68) ;
ein Fenster (72), das dazu ausgelegt ist, den Durchtritt von Licht aus dem Innenbereich (68) zuzulassen; und
eine Außenoberfläche (70), die dazu ausgelegt ist, bei Einbringung von Silan und Anwendung von elektromagnetischer Strahlung Silan anzunehmen;
einen Plasmafeldrezeptor (18; 48), wobei sich der Plasmafeldrezeptor (18; 48) in der Nähe des Silanabscheidungsgehäuses (62) befindet, um die Silanabscheidung auf dem Sensor (32; 70) während der Anwendung der elektromagnetischen Strahlung zu steigern;
eine Lichtquelle (64), die in dem Innenbereich (68) des Silanabscheidungsgehäuses (62) angebracht ist und dazu ausgelegt ist, Licht **durch** das Fenster (72) des Silanabscheidungsgehäuses zu emittieren; und
einen Fotosensor (66), der dazu ausgelegt ist, Licht wahrzunehmen, das aus dem Fenster des Silanabscheidungsgehäuses (62) emittiert wird, und dazu ausgelegt ist, ein Erfassungssignal zu übermitteln.

13. Silanabscheidungs-Überwachungssystem nach Anspruch 12, bei dem die Lichtquelle (64) ausgewählt ist aus der Gruppe, die aus einer elektrischen Glühbirne, einer lichtemittierenden Diode, oder einer optischen Faser besteht.

14. Silanabscheidungs-Überwachungssystem nach Anspruch 12 oder 13, bei dem das Silanabscheidungsgehäuse (62) ein optisch durchsichtiger Kunststoff ist.

15. Silanabscheidungs-Überwachungssystem nach Anspruch 14, bei dem das Silanabscheidungsgehäuse (62) ein Polycarbonat ist.

## Revendications

1. Une méthode de contrôle de dépôt de silane dans un appareil de traitement au plasma (10), la méthode étant **caractérisée par** :
disposer un capteur de dépôt de silane (32 ; 70) à l'intérieur d'un récipient de traitement (12), où le capteur de dépôt de silane (32 ; 70) est configuré pour recevoir du silane lors de l'introduction de silane dans le récipient de traitement (12) et de l'application de rayonnement électromagnétique et est situé à proximité d'un récepteur de champ de plasma (18 ; 48) afin d'augmenter le dépôt de silane sur ledit capteur (32 ; 70) pendant l'application dudit rayonnement électromagnétique ;
introduire un silane dans le récipient de traitement (12) ;
appliquer un rayonnement électromagnétique à l'intérieur du récipient de traitement (12) ; et
évaluer de façon optique le capteur de dépôt de silane (32 ; 70) pour le silane.

2. La méthode de la revendication 1, dans laquelle évaluer de façon optique le capteur de dépôt de silane (32) comprend d'évaluer de façon visuelle le capteur de dépôt de silane pour un excès de silane.

3. La méthode de la revendication 1, dans laquelle le capteur de dépôt de silane comprend une source de lumière (64) et un photocapteur (66), et dans laquelle évaluer de façon optique le capteur de dépôt de silane (70) comprend de détecter la lumière émise par la source de lumière (64) avec le photocapteur (66).

4. Un système de contrôle de dépôt de silane (30, 40) comprenant :
un récipient de traitement (12) comprenant :
une entrée (16) pour introduire un silane dans le récipient de traitement (12) ; et
une unité de puissance (14) pour appliquer un rayonnement électromagnétique à l'intérieur du récipient de traitement (12) ;
et **caractérisé par**
un capteur de dépôt de silane (32 ; 70) situé à l'intérieur du récipient de traitement (12) et configuré pour recevoir du silane lors de l'introduction de silane dans le récipient de traitement et l'application de rayonnement électromagnétique ; et
un récepteur de champ de plasma (18 ; 48), dans lequel le récepteur de champ de plasma (18 ; 48) est situé à proximité du capteur de dépôt de silane (32 ; 70) afin d'augmenter le dépôt de silane sur ledit capteur (32 ; 70) pendant l'application dudit rayonnement électromagnétique.

5. La méthode ou le système de l'une quelconque revendication précédente, dans lequel le capteur de dépôt de silane (32) est un composite de matrice de polymère de fibres de verre.

6. La méthode ou le système de l'une quelconque revendication précédente, dans lequel le capteur de dépôt de silane (32) est jetable.

7. La méthode ou le système de l'une quelconque revendication précédente, dans lequel le capteur de dépôt de silane (32) a une surface lisse.

8. La méthode ou le système de l'une quelconque revendication précédente, dans lequel le capteur de dépôt de silane (32) est une couleur sélectionnée dans le groupe constitué du rouge, du bleu, du vert et de combinaisons de celles-ci.

9. La méthode ou le système de l'une quelconque revendication précédente, dans lequel le récipient de traitement (12) comprend en outre une planche de métal (18) et le récepteur de champ de plasma est la planche de métal (18).

10. La méthode ou le système selon la revendication 9, dans lequel le capteur de dépôt de silane (32) est fixé à la planche de métal (18).

11. La méthode ou le système de l'une quelconque des revendications 1 à 8, dans lequel le récipient de traitement (12) comprend en outre une planche de métal (18) et un isolateur de champ de plasma (46) est situé entre le capteur de dépôt de silane (32) et une planche de métal (18) du récipient de traitement (12).

12. Un système de contrôle de dépôt de silane (60) **caractérisé par**
un boitier de dépôt de silane (62) comprenant :
une région intérieure (68) ;
une fenêtre (72) configurée pour permettre le passage de lumière de la région intérieure (68) ; et
une surface extérieure (70) configurée pour recevoir du silane lors de l'introduction de silane et l'application de rayonnement électromagnétique ;
un récepteur de champ de plasma (18 ; 48), dans lequel le récepteur de champ de plasma (18 ; 48) est situé à proximité du boitier de dépôt de silane (62) afin d'augmenter le dépôt de silane sur ledit capteur (32 ; 70) pendant l'application dudit rayonnement électromagnétique ;
une source de lumière (64) positionnée dans la région intérieure (68) du boitier de dépôt de silane (62) et configurée pour émettre de la lumière à travers la fenêtre (72) du boitier de dépôt de silane ; et
un photocapteur (66) configuré pour détecter la lumière émise de la fenêtre du boitier de dépôt de silane (62) et configuré pour transmettre un signal de détection.

13. Le système de contrôle de dépôt de silane de la revendication 12, dans lequel la source de lumière (64) est sélectionnée dans le groupe constitué d'une ampoule électrique, d'une diode électroluminescente, ou d'une fibre optique.

14. Le système de contrôle de dépôt de silane de la revendication 12 ou 13, dans lequel le boitier de dépôt de silane (62) est un plastique optiquement clair.

15. Le système de contrôle de dépôt de silane de la revendication 14, dans lequel le boitier de dépôt de silane (62) est un polycarbonate.
